# EUROPÄISCHE PATENTSCHRIFT

(11) **EP 0 978 339 B1**
(45) Veröffentlichungstag und Bekanntmachung des Hinweises auf die Patenterteilung: **25.05.2005**
(21) Anmeldenummer: 99114992.3
(22) Anmeldetag: 31.07.1999
(51) Int. Cl.: B23C 3/12, B23C 3/28

(54) **Vorrichtung zum Zuschneiden von Profilstücken für Fenster oder Türen**
Device for cutting profiles for windows or doors
Dispositif de coupe des profilés de fenêtres ou portes

(30) Priorität: 04.08.1998 DE 19835210
(43) Veröffentlichungstag der Anmeldung: 09.02.2000
(73) Patentinhaber: Eisenbach, Bernhard, D-65611 Brechen (DE)
(72) Erfinder: Eisenbach, Bernhard, D-65611 Brechen (DE)
(74) Vertreter: Müller, Eckhard, Dr.

(56) Entgegenhaltungen:
- DE-A- 3 027 459
- DE-A- 3 107 396
- DE-A- 19 828 030

## Beschreibung

Die Erfindung betrifft eine Vorrichtung zum Zuschneiden von Profilstücken für Fenster- oder Türrahmen mit wenigstens einem, vorzugsweise schwenkbaren, Sägeaggregat.

Beim Herstellen von Kunststoffenstern werden die Profilstücke in der gewünschten Länge auf Gehrung geschnitten und miteinander zu einem Rahmen verschweißt. Meist sind beim Verschweißen bereits ein oder mehrere Dichtungsbänder eingelegt, die dann ebenfalls mit dem benachbarten Dichtungsband verschweißt werden. Bei diesem Verschweißen mittels Erhitzen und Druckeinwirkung bilden sich Schweißwülste, die dazu führen, daß außen auf der Sichtseiten des Fensters Schweißraupen und im Inneren im Bereich der Dichtungen Verdickungen entstehen. Die außenliegenden Schweißraupen können in einem nachfolgenden Arbeitsgang abgestochen werden. Bei den Verdickungen im Inneren ist es etwas problematischer, da dort praktisch kein Zugriff besteht. Die Verdickung der Dichtungen kann aber dazu führen, daß die Dichtung neben der Verdickung nicht mehr exakt an der Scheibe oder einem anderen zu dichtenden Element anliegt.

Wünschenswert ist es deshalb, im Inneren des Fensterrahmens Vertiefungen zu schaffen, in welche die beim Schweißen entstehenden Schweißwülste der Fensterdichtungen verschwinden können, so daß sie an der Scheibe nicht stören. Deshalb werden bisher vor dem Zusammenschweißen an den auf Gehrung geschnittenen Fensterprofilen durch Fräsen Vertiefungen hergestellt, in die sich die Schweißwülste der Fensterdichtungen beim Schweißen des Fensters hineinlegen. Dieses Ausfräsen von Vertiefungen erfolgt üblicherweise freihändig in einem zweiten Arbeitsgang, was dazu führt, daß die Vertiefungen manchmal an den falschen Stellen angeordnet sind oder auch nicht ausreichend tief sind.

Aus dem Prospekt "RAPID ― Doppelgehrungssäge DGL" der RAPID-Maschinenbau GmbH, Ofterdingen aus 1995, ist eine Doppelgehrungssäge zum Zuschneiden von Profilstücken für Fenster- oder Türrahmen bekannt mit zwei schwenkbaren Sägeaggregaten. Die Sägeaggregate sind jeweils an einem Schlitten gehalten, welcher in Längsrichtung der Vorrichtung verfahrbar sind.

Nachteilig bei dieser bekannten Doppelgehrungssäge ist wiederum, dass die erforderlichen Aussparungen in dem Fensterprofil für die Aufnahme der durch die Verschweißung entstehenden Verdickungen der Fensterdichtungen in einer separaten Fertigungsstation gefräst werden müssen. Die Profile müssen dann aus der Spanneinrichtung der Doppelgehrungssäge herausgenommen werden, um mittels einer Fräseinrichtung die Aussparung für die Verdickungen der Fensterdichtungen in einem separaten Arbeitsschritt einzuarbeiten.

Weiterhin ist aus der DE-A-198 28 030 eine Vorrichtung zur Bearbeitung von Rahmenschenkeln für die Herstellung geschweißter Fenster- oder Türrahmen aus Kunststoff bekannt, welche eine Führungseinrichtung für die Rahmenschenkel und eine längs der Führungseinrichtung verfahrbare Vorschubeinheit mit einem Greifer zur Zufuhr der Rahmenschenkel zur Bearbeitungsstation aufweist. Die Bearbeitungsstation ist mit einem Scheibenfräser versehen, der einstellbar zum Rahmenschenkel angeordnet ist. Auch bei dieser bekannten Vorrichtung ist also eine separate Arbeitsstation für die Herstellung der Aussparung zur Aufnahme der Verdickung der Fensterdichtungen erforderlich.

Aufgabe der Erfindung ist es daher, eine Vorrichtung mit den Merkmalen des Anspruches 1 dahingehend weiterzubilden, dass nach dem Sägevorgang das Fräsen der Aussparungen erfolgen kann, ohne dass die Lage des Werkstückes verändert werden muß.

Diese Aufgabe wird erfindungsgemäß gelöst von einer Vorrichtung mit den Merkmalen des Anspruchs 1. Ausführungen der Erfindung sind Gegenstände von Unteransprüchen.

Nach der Erfindung weist die Vorrichtung zum Zuschneiden von Profilstücken für Fenster- oder Türrahmen mit wenigstens einem, vorzugsweise schwenkbaren, Sägeaggregat zusätzlich einen Fräser zum Fräsen von Aussparungen an den auf Gehrung geschnittenen Profilstücken auf, wobei der Fräser an einem Schlitten gehalten ist, der in einer längs zur Gehrungsschnittfläche an dem Profilstück verlaufenden Schlittenführung derart geführt ist, dass bei einer Vorwärtsbewegung des Schlittens der Fräser gegen das Profil zum Fräsen der jeweiligen Aussparung eingeschwenkt wird.

Mit Hilfe der Erfindung ist es möglich, nach dem Sägevorgang das Fräsen der Aussparungen durchzuführen, ohne dass die Lage des Werkstückes verändert werden muß und ohne dass ein Weitertransport oder ein neues Einspannen erforderlich ist.

Weitere Vorteile und Anwendungsmöglichkeiten der vorliegenden Erfindung ergeben sich aus der nachfolgenden Beschreibung eines Ausführungsbeispieles anhand der Zeichnung.

Die Figuren zeigen:
- Figur: 1 eine Gehrungsschnittfläche eines Fensterprofiles,
- Figur 2: eine Draufsicht auf ein auf Gehrung geschnittenes Fensterprofil beim Fräsen der unteren Aussparung,
- Figur 3: eine Draufsicht auf ein auf Gehrung geschnittenes Fensterprofils beim Fräsen der oberen Aussparung,
- Figur 4: eine Seitenansicht eines Fräsers zum Herstellen der Aussparungen,
- Figur 5: eine Handmaschine,
- Figur 6: eine Draufsicht auf die Handmaschine der Figur 5,
- Figur 7: eine Seitenansicht der Handmaschine der Figur 5,
- Figur 8: eine Vorderansicht einer Doppelgehrungssäge mit angebauter Fräseinrichtung,
- Figur 9: eine Draufsicht auf die Doppelgehrungssäge mit angebauter Fräseinrichtung der Figur 8,
- Figur 10: eine Seitenansicht der Doppelgehrungssäge mit angebauter Fräseinrichtung der Figur 8,
- Figur 11: 1 eine mögliche Ausführungsform eines Doppelnut-Fräsers zum Einsatz für eine Vorrichtung gemäß Figur 5 und
- Figur 12: eine mögliche Ausführungsform einer Zweifach-Doppelnut-Fräsers zum Einsatz bei einer Vorrichtung gemäß Figuren 9 und 10.

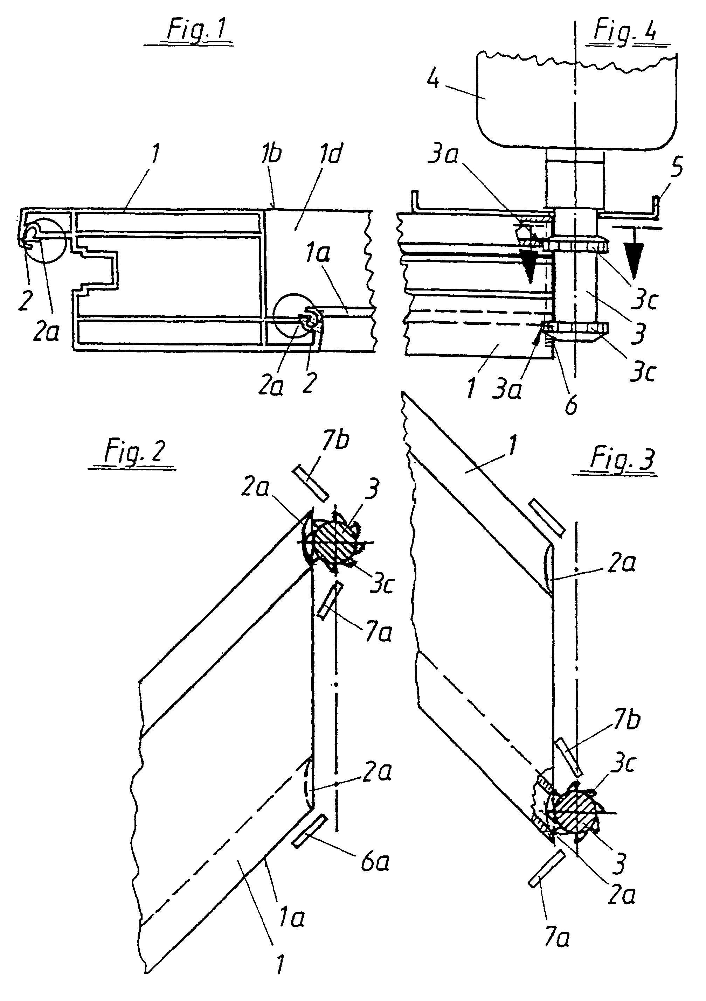

Figur 1 zeigt ein Fensterprofil 1, wobei links die Gehrungsschnittfläche zu erkennen und rechts die - später das Fenster tragende - Rahmeninnenseite 1a zu sehen ist. Mit Bezugszeichen 1b und 1c sind die Rahmensichtseiten bezeichnet, die parallel zur später eingefügten Fensterscheibe verlaufen und mit 1d die nicht sichtbare Rahmenaußenseite, die parallel zur Zeichnungsebene und zur Rahmeninnenseite 1a verläuft. Mit 2 sind die Fensterdichtungen bezeichnet, mit 2a die gewünschten Aussparungen, in die beim späteren Verschweißen dieses Fensterprofils 1 mit einem benachbarten Profil die aus den Fensterdichtungen 2 sich bildenden Wülste verschwinden sollen.

Figur 2 zeigt, wie mittels des Fräsers 3 an der Frässtelle 3a die untere Aussparung 2a in das Fensterprofil 1 eingebracht wird. Angedeutet sind hier bereits die Endanschläge 6a, 7a und 7b, an die die Rahmeninnen- oder -außenseiten 1b oder 1c angelegt werden und die so eine exakte Justierung des Fräsers 3 an der zu fräsenden Stelle 3a erlauben.

Figur 3 zeigt das Fräsen der oberen Aussparung 2a durch den Fräser 3 an der Frässtelle 3a, wobei hier ebenfalls wieder die Endanschläge 6a, 7a und 7b zu erkennen sind.

Es sei an dieser Stelle darauf hingewiesen, dass die in den Figuren 4 bis 7 gezeigten Handfräser nicht die Erfindung darstellen.

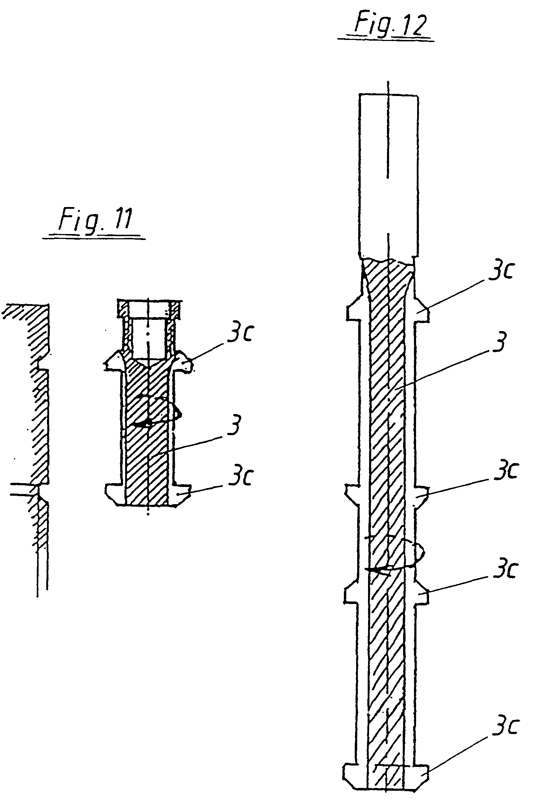

Figur 4 zeigt die Seitenansicht mit einem Fräser zur Herstellung der Aussparungen 2a. Bei dieser Handmaschine wird ein Fräser 3 mit zwei Frässtellen 3a verwendet. Ein solcher Fräser (Doppelnut-Fräser) mit Spanndickenbegrenzung 3a ist gesondert in Figur 11 dargestellt. Möglich ist genauso die Verwendung eines Fräsers mit vier Frässtellen 3a entsprechend der Darstellung in Figur 12. Solche Fräser werden z.B. bei Stationärmaschinen eingesetzt, wenn immer gleichzeitig zwei Profile zugeschnitten werden. Die Figur 4 zeigt das Fensterprofil 1a und eine erfindungsgemäße Fräsvorrichtung mit dem Fräsmotor 4 und dem Doppelnut-Fräser 3. Die erfindungsgemäße Auflageplatte 5 liegt auf der Rahmensichtseite 1b oder 1c auf und bewirkt dadurch, daß die Fräser 3 automatisch in der richtigen Tiefe des Rahmenprofils 1 eingreifen. Wie deutlich zu erkennen ist, kann der Benutzer die Vorrichtung auf dem Fensterprofil 1 hin und her schieben. Durch die Auflageplatte 5 sind die Fräser 3 immer automatisch auf die richtige Tiefe eingestellt. Dadurch, daß die Zähne 3c des Fräsers einen gewissen Betrag radial vor der Welle des Fräsers 3 vorstehen, wird erfindungsgemäß eine Spanndickenbegrenzung erreicht, so daß die Vertiefungen im Profil nicht tiefer werden können als der radiale Abstand der Spitzen der Zähne 3c zur Fräserwelle 3 ist. Die Maschine verhindert also auf diese Weise sehr effektiv ein zu tiefes Eindringen des Fräsers 3. So kann erfindungsgemäß die Fräsung weder in der Tiefe noch in ihrer Lage innerhalb des Fensters falsch eingebracht werden. Daß die Fräsung auch an der richtigen Stelle erfolgt, also genau dort, wo die Dichtung später sein wird, wird von den Anschlagelementen 6 und 7 erzwungen, wie die nachfolgenden Figuren zeigen.

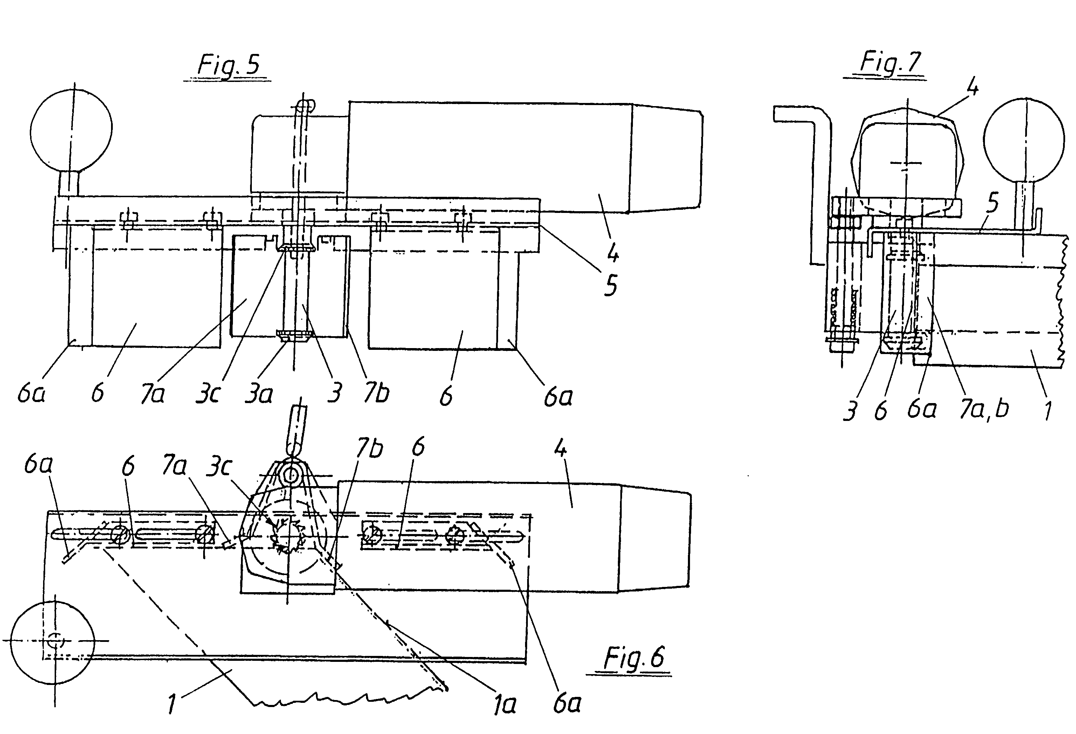

Figur 5 zeigt eine erfindungsgemäße Vorrichtung, bei der der Fräser 3 in den Fräsmotor 4 eingespannt ist. Der Fräser 3 hat auch hier wieder zwei Frässtellen 3a, die senkrecht übereinander angeordnet sind. Der Fräsmotor 4 ist an der Auflageplatte 5 befestigt, die ihrerseits die Stirnseitenanschläge 6 trägt. Die Stirnseitenanschläge 6 sind längsverschiebbar mit den Endanschlägen 6a versehen und sind so an verschieden breite Profile anpaßbar. Dadurch wird die erfindungsgemäße Fräsvorrichtung automatisch an die richtige Stelle in der Gehrungsschnittfläche des Fensterprofils 1 angesetzt. Zur exakteren Führung sind hier in der Nähe des Fräsers 3 noch die mittleren Endanschläge 7a und 7b vorgesehen, die, je nachdem von welcher Seite der Fensterrahmen 1 eingeschoben wird, wechselweise den Fensterrahmen 1 in der gewünschten Stellung halten. Diese Anschläge 7a und 7b werden also wahlweise eingeschwenkt und eingerastet; jeweils einer (7a oder 7b) stützen die Rahmeninnenseite 1a, wie es zum Beispiel Fig. 6 zeigt.

Die gezeigte Vorrichtung funktioniert wie folgend:
Die Vorrichtung wird mit ihrer Platte 5 auf eine der Rahmensichtseiten 1b oder 1c auf das zu bearbeitende Fensterprofil 1 aufgesetzt. Durch Verschieben werden die Stirnseitenplatten 6 und die Endanschläge 6a an die Rahmeninnenseite 1a oder an die Rahmenaußenseite 1d angelegt. Dann wird die Maschine eingeschaltet, im Fräserbereich eingeschwenkt und weiter entsprechend der eingestellten Anschläge 6a oder 7a und 7b verschoben, so daß der Fräser 3 die gewünschte Aussparung 2a erzeugt.

Figur 6 zeigt eine Draufsicht auf die erfindungsgemäße Vorrichtung gemäß der Figur 5, wobei hier noch das Profil 1, welches bearbeitet wird, mit eingezeichnet ist. In dieser Draufsicht ist sehr gut zu erkennen, wie bei der erfindungsgemäßen Vorrichtung das Profil 1 angelegt wird und wie die Endanschläge 7a, 7b oder 6 und 6a beim Fräsen der Aussparung 2a für die obere oder die untere Dichtung wirken. In der Figur 6 sieht man aktuell die Anlage für das Fräsen der oberen oder inneren Dichtung des Rahmens, also in der Nähe der Rahmeninnenseite 1a. Der Endanschlag 6 gibt die Tiefe an, der Anschlag 7b hält das Profil an seiner Innenseite 1a so, daß das Fräswerkzeug 3 an der richtigen Frässtelle 3a sitzt und dadurch die Aussparung 2a herstellt, wo und wie sie vorgesehen ist. Gut zu erkennen ist auch die Schwenkbarkeit des Anschlages 7a, 7b der, wenn z.B. eine andere Aussparung für eine Dichtung gefräst werden soll, dann um einen Lagerpunkt hinter der Fräserwelle umschwenkt und bevorzugt in der neuen Stellung wieder einrastet, was durch den oben gezeichneten Stift angedeutet wird, so daß der mit 7b bezeichnete Schenkel dann nach oben klappt und der mit 7a bezeichnete Schenkel des schwenkbaren Elements 7 den Anschlag für die andere Seite bildet.

Figur 7 zeigt eine Seitenansicht einer erfindungsgemäßen Vorrichtung. Zu erkennen sind wieder der Fräsmotor 4, die Auflageplatte 5 und die Anschläge 6, 6a, 7a, 7b in ihrem Zusammenwirken mit dem Fensterprofil 1. Ebenso die zwei Fräser 3, wie sie in die Gehrungsschnittfläche des Fensterprofils 1 eingreifen.

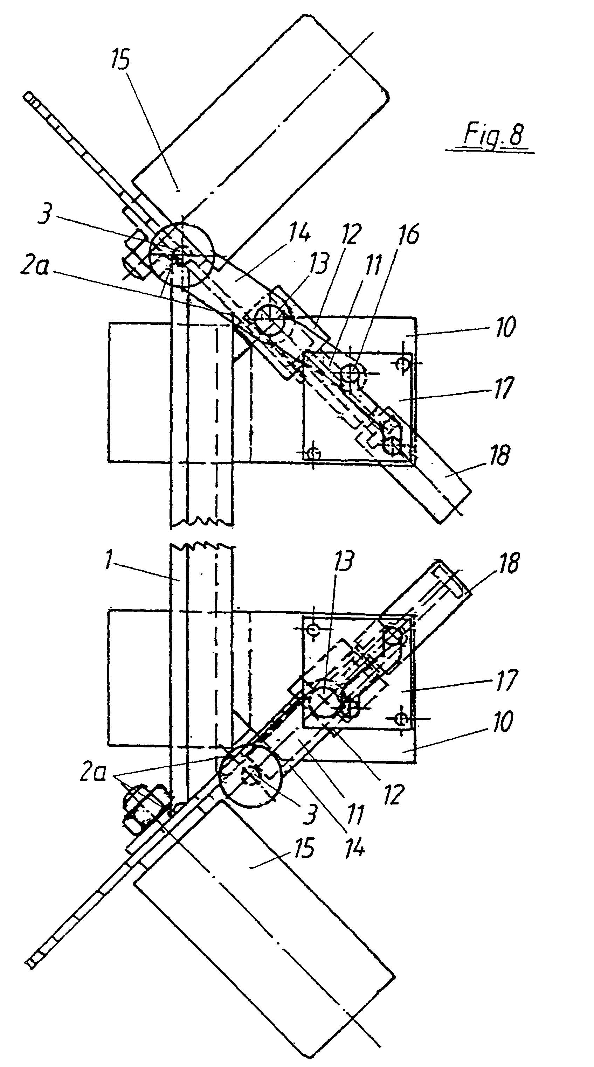

Figur 8 zeigt nun eine Vorrichtung zum weitgehend automatisierten Herstellen von Aussparungen für Fensterdichtungen an Kunststoffprofilen auf stationären Zuschnittmaschinen. Die Kunststoffprofile 1 werden hier mit zwei Kreissägen auf Gehrung zugeschnitten. Praktischerweise werden meistens gleich zwei Profile zugeschnitten. Auch hier müssen die Aussparungen für die Profildichtungen nach dem Zuschnitt und vor dem Schweißen eingebracht werden. Bisher war es nicht möglich, an den vorhandenen Zuschnittsägen, Doppelgehrungssägen oder dgl. Zusatzaggregate für diesen Zweck anzubringen. Mit Hilfe der Erfindung ist es nun möglich, entsprechende Zusatzaggregate in die entsprechenden Maschinen einzubauen. Insbesondere deshalb, weil die erfindungsgemäßen Vorrichtungen nur wenig Platz beanspruchen und die Antriebsaggregate der Fräser 3 außerhalb des Schnittbereichs der Maschine angebracht werden können, gelingt es, die erfindungsgemäßen Aggregate auch in vorhandene Doppelgehrungssägen zu integrieren bzw. nachträglich einzubauen.

An den schwenkbaren Sägeaggregaten oder an den Stirnseiten der Auflagebacken von Zuschnittmaschinen sind die Platten 10 angeschraubt. Auf den Platten 10 sind Schlittenführungen 11 mit Schlitten 12 montiert. Auf jedem Schlitten 12 ist ein Drehbolzen 13 angebracht. An dem Bolzen 13 ist ein doppelarmiger Hebel 14 verschwenkbar angeordnet. An einem Ende des Hebels 14 befindet sich ein Antriebsmotor 15 mit dem Fräser 3 und am anderen Ende des Hebels 14 eine Kurvenrolle 16, die in einer Schablone 17 geführt wird. Am unteren Ende der Schlittenführung 11 ist ein Pneumatikzylinder 18 befestigt, der den Schlitten 12 bewegen kann.

Die Arbeitsweise ist wie folgend:
Der Fräser 3 befindet sich in Ausgangsstellung außerhalb des Schnittbereiches des Sägeblattes der Zuschnittsäge, wie dies Figur 8 in ihrem linken Teilbild zeigt. Wie bekannt, werden nun die Profile 1 mit den Kreissägeblättern zugeschnitten. Sobald das zugeordnete Sägeblatt zurückgefahren ist, schiebt der Pneumatikzylinder 18 den Schlitten 12 nach vorne. Die Kurvenrolle 16 in der Schablone 17 schwenkt nun den Hebel 14 so zur Seite - genauer gesagt erst an den richtigen Ort und dann in die richtige Tiefe in der Gehrungsschnittfläche -, daß der Fräser 3 an den gewünschten Stellen das Profil 1 so fräst, daß die Aussparungen 2a entstehen. Dann fährt der Pneumatikzylinder 18 wieder zurück und verschwenkt dabei dank der Schablone 17 den Hebel 14 so, daß der Fräser 3 wieder außerhalb des Sägebereichs positioniert wird.

Figur 8 zeigt links die Fräseinrichung in zurückgezogenem Zustand; zu beachten ist, daß hier der Fräsmotor 15 in die Schnittebene - aber natürlich nicht in das Sägeblatt - hineinragt, der Fräser 3 jedoch nicht. Auf der rechten Seite der Figur 8 sieht man die Stellung bei betätigtem Pneumatikzylinder 18, nämlich den vorgefahrenen Schlitten 12, der durch die Schablonenführung 17 bewirkt, daß der vom Fräsmotor 15 bewegte Fräser 3 an der vorgegebenen Stelle in das Fensterprofil 1 eindringt und dort die Aussparung 2a in gewünschter Tiefe einbringt.

Die Fräseinrichtung kann sowohl oberhalb wie auch unterhalb des Profiles angeordnet werden, wie dies in Figur 8 dargestellt ist.

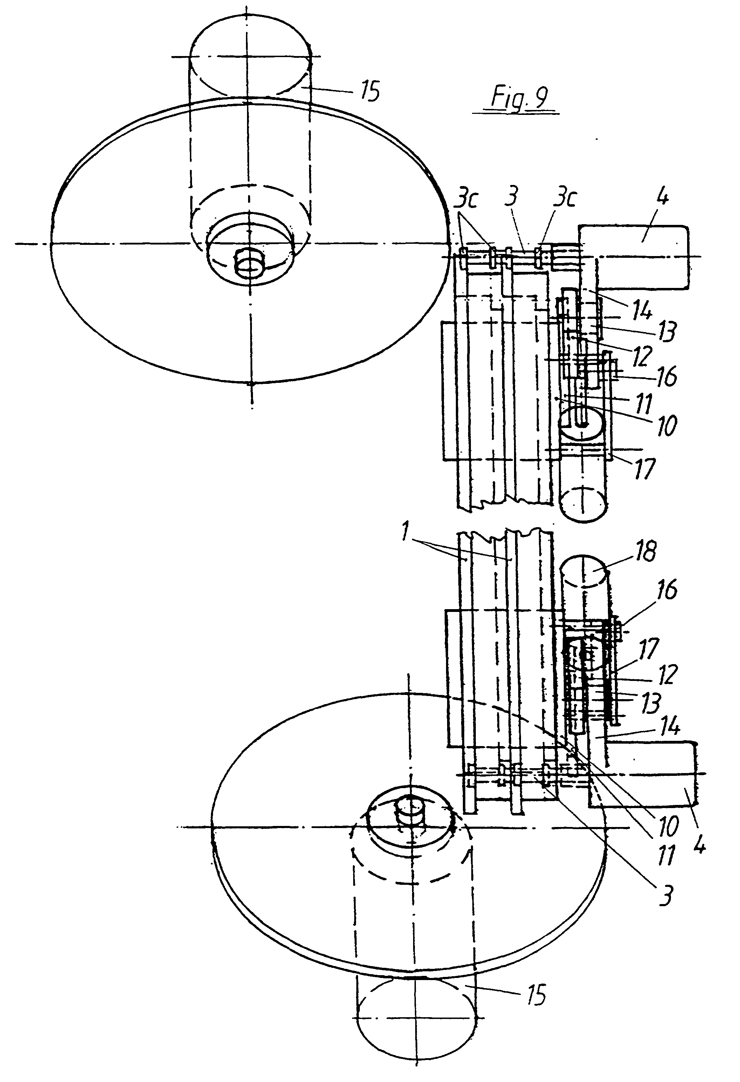

Figur 9 zeigt die Vorrichtung der Figur 8 in Draufsicht, wobei links die Stellung gezeigt ist, in der das Sägeblatt das Fensterprofil auf Gehrung schneidet und die Fräseinrichtung zurückgezogen und nicht in Bearbeitungsstellung ist. Rechts ist das Sägeblatt herausgeschwenkt gezeigt, während die Fräseinrichtung durch Betätigung des Pneumatikzylinders 18 in Bearbeitungsstellung gebracht wurde, so daß die vier Frässtellen 3a des Fräsers 3 nun die gewünschten Aussparungen 2a in die aufeinanderliegenden Fensterprofile 1 einbringen.

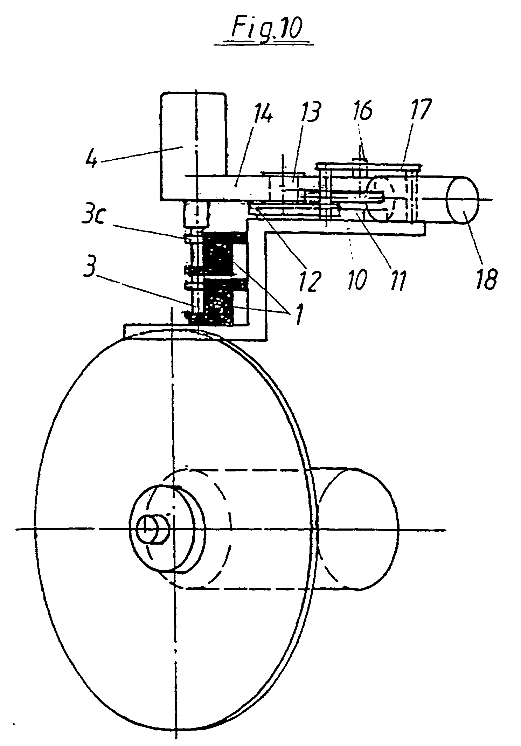

Figur 10 zeigt eine Seitenansicht der erfindungsgemäßen Vorrichtung, wobei hier wieder zu erkennen ist, wie die Fräser 3 in die zwei aufeinanderliegende Fensterprofile 1 und dadurch die gewünschten Aussparungen erstellen.

Es ist offensichtlich, daß durch Auswechseln der Schablone 17 für die verschiedensten Profile unterschiedlichste Anzahlen, Tiefen und unterschiedlichste Orte zum Einbringen der gewünschten Aussparungen vorgegeben werden können.

### Bezugszeichenliste

- 1 -: Fensterprofil
- 1a -: Rahmeninnenseite
- 1b -: Rahmensichtseite
- 1c -: Rahmensichtseite
- 1d -: Rahmenaußenseite
- 2 -: Fensterdichtung
- 2a -: Aussparung
- 2 -: Fräser
- 3a -: Frässtelle
- 3c -: Zähne
- 4 -: Fräsmotor
- 5 -: Auflageplatte
- 6 -: Stirnseitenanschlag
- 6a -: Endanschlag
- 7 -: Element
- 7a,b -: Endanschläge
- 10 -: Platte
- 11 -: Schlittenführung
- 12 -: Schlitten
- 13 -: Drehbolzen
- 14 -: Hebel
- 15 -: Antriebsmotor
- 16 -: Kurvenrolle
- 17 -: Schablone
- 18 -: Pneumatikzylinder

## Patentansprüche

1. Vorrichtung zum Zuschneiden von Profilstücken (1) für Fenster- oder Türrahmen mit wenigstens einem, vorzugsweise schwenkbaren, Sägeaggregat (15), **gekennzeichnet durch** einen Fräser (3) zum Fräsen von Aussparungen (2a) an den auf Gehrung geschnittenen Profilstücken (1), wobei der Fräser (3) an einem Schlitten (12) gehalten ist, der in einer längs zur Gehrungsschnittfläche an dem Profilstück (1) verlaufenden Schlittenführung (11) derart geführt ist, dass bei einer Vorwärtsbewegung des Schlittens (12) der Fräser (3) gegen das Profil (1) zum Fräsen der jeweiligen Aussparung (2a) eingeschwenkt wird.

2. Vorrichtung nach Anspruch 1, **dadurch gekennzeichnet, dass** an dem Schlitten (12) ein Hebel (14) drehbar gelagert ist, an dessen einem Ende der Fräser (3) mit seinem Antriebsmotor (4) gehalten und dessen anderes Ende mittels einer Kurvenrolle (16) in eine Schablone (17) eingreift, so dass bei einer Vorwärtsbewegung des Schlittens (12) die Kurvenrolle (16) den Hebel (14) und damit den Fräser (3) mit Antriebsmotor (4) von einer Stellung außerhalb des Sägebereichs in die Arbeitsstellung an das Profilstück (1) einschwenkt.

3. Vorrichtung nach Anspruch 1 oder 2, **dadurch gekennzeichnet, dass** zum Verschieben des Schlittens (12) ein Pneumatikzylinder (18) vorgesehen ist.

4. Vorrichtung nach einem der vorhergehenden Ansprüche, **dadurch gekennzeichnet, dass** der Fräser (3) mit Antriebsmotor (4) und Schwenkeinrichtung (11 bis 18) zusammen mit dem Sägeaggregat mit Antriebsmotor (15) über eine Platte (10) miteinander verbunden sind.

5. Vorrichtung nach einem der vorhergehenden Ansprüche, **dadurch gekennzeichnet, dass** das Sägeblatt mit Antriebsmotor (15) und der Fräser (3) mit Antriebsmotor (4) sowie mit seiner Schwenkeinrichtung (11 bis 18) auf gegenüberliegenden Seiten des wenigstens einen zu bearbeitenden Profilstückes (1) angeordnet sind.

6. Vorrichtung nach einem der vorhergehenden Ansprüche, **dadurch gekennzeichnet, dass** sie als Doppelgehrungssäge ausgebildet ist mit zwei im seitlichen Abstand zueinander angeordneten Sägeaggregaten mit Antriebsmotoren (15), zugeordneten Fräsern (3) mit Antriebsmotoren (4) und Schwenkeinrichtungen (11 bis 18).

7. Vorrichtung nach einem der vorhergehenden Ansprüche, **dadurch gekennzeichnet, dass** der Fräser (3) als Nutenfräser ausgebildet ist, mit wenigstens zwei auf einem Kreisumfang um die Fräserachse in axialem Abstand zueinander angeordneten Zähnen (3c).

8. Vorrichtung nach einem der Ansprüche 1 bis 7, **dadurch gekennzeichnet, dass** der Fräser eine Sparrendickenbegrenzung aufweist.

9. Vorrichtung nach Anspruch 8, **dadurch gekennzeichnet, dass** die Sparrendickenbegrenzung durch die gegenüber der Drehachse des Fräsers (3) radial nach außen vorstehende Zahnlängen gebildet ist.

## Claims

1. Device for cutting up profile members (1) for window or door frames, with at least one, preferably pivotable, saw unit (15), **characterised by** a milling tool (3) for milling recesses (2a) at the profile members (1) cut to mitre, wherein the milling tool (3) is mounted at a carriage (12) which is guided in a carriage guide (11), which extends longitudinally with respect to the mitre cut surface at the profile member (1), in such a manner that in case of forward movement of the carriage (12) the milling tool (3) is pivoted against the profile member (1) for milling the respective recess (2a).

2. Device according to claim 1, **characterised in that** rotatably mounted at the carriage (12) is a lever (14), at one end of which the milling tool (3) is mounted by its drive motor (4) and the other end of which engages by means of a cam roller (16) in a template (17) so that in the case of a forward movement of the carriage (12) the cam roller (16) pivots the lever (14) and thus the milling tool (3) together with drive motor (4) from a setting outside the sawing region into the work setting at the profile member (1).

3. Device according to claim 1 or 2, **characterised in that** a pneumatic cylinder (18) is provided for displacing the carriage (12).

4. Device according to one of the preceding claims, **characterised in that** the milling tool (3) together with drive motor (4) and pivot device (11 to 18) as well as the saw unit together with drive motor (15) are connected together by way of a plate (10).

5. Device according to one of the preceding claims, **characterised in that** the saw blade with drive motor (15) and the milling tool (3) with drive motor (4) as well as its pivot device (11 to 18) are arranged on opposite sides of the at least one profile member (1) to be processed.

6. Device according to one of the preceding claims, **characterised in that** it is constructed as a double mitre saw with two saw units, which are arranged at a lateral spacing relative to one another with drive motors (15), associated milling tools (3) with drive motors (4) and pivot devices (11 to 18).

7. Device according to one of the preceding claims, **characterised in that** the milling tool (3) is constructed as a groove milling tool with at least two teeth (3c) arranged at an axial spacing relative to one another on a circular circumference about the milling tool axis.

8. Device according to one of claims 1 to 7, **characterised in that** the milling tool comprises a spar thickness limitation means.

9. Device according to claim 8, **characterised in that** the spar thickness limitation means is formed by the tooth lengths protruding radially outwardly relative to the axis of rotation of the milling tool (3).

## Revendications

1. Dispositif de coupe à longueur de profilés (1) pour bâtis de fenêtres ou portes, comportant au moins un groupe de sciage (15) de préférence pivotant, **caractérisé par** une fraise (3) destinée à fraiser des évidements (2a) dans les profilés (1) coupés en onglet, la fraise (3) étant fixée sur un chariot (12), qui est guidé dans un guide (11), qui s'étend le long de la surface de coupe en onglet sur le profilé (1), de telle sorte que, lors d'un mouvement d'avance du chariot (12), la fraise (3) pivote à l'intérieur contre le profilé (1) pour fraiser l'évidement (2a) correspondant.

2. Dispositif selon la revendication 1, **caractérisé en ce qu'**un levier (14) est monté pivotant sur le chariot (12), l'une des extrémités dudit levier portant la fraise (3) comportant son moteur d'entraînement (4) et l'autre extrémité venant en prise au moyen d'un galet de guidage (16) dans un gabarit (17), de telle sorte que, lors d'un mouvement d'avance du chariot (12), le galet de guidage (16) fait pivoter le levier (14) et, avec celui-ci, la fraise (3) avec le moteur d'entraînement (4) à partir d'une position en dehors de la zone de sciage dans la position de travail sur le profilé (1).

3. Dispositif selon la revendication 1 ou 2, **caractérisé en ce qu'**il est prévu un vérin pneumatique (18) pour le déplacement du chariot (12).

4. Dispositif selon l'une quelconque des revendications précédentes, **caractérisé en ce que** la fraise (3) comportant le moteur d'entraînement (4) et le dispositif de pivotement (11 à 18) sont reliés ensemble à la scie comportant le moteur d'entraînement (15) par l'intermédiaire d'une plaque (10).

5. Dispositif selon l'une quelconque des revendications précédentes, **caractérisé en ce que** la lame de scie comportant le moteur d'entraînement (15) et la fraise (3) comportant le moteur d'entraînement (4) et son dispositif de pivotement (11 à 18) sont agencés sur des côtés opposés du au moins un profilé (1) à usiner.

6. Dispositif selon l'une quelconque des revendications précédentes, **caractérisé en ce qu'**il est conçu sous forme de scie pour double coupe en onglet, comportant deux groupes de sciage, écartés latéralement l'un de l'autre, comportant des moteurs d'entraînement (15), des fraises (3) associées, comportant des moteurs d'entraînement (4) et des dispositifs de pivotement (11 à 18).

7. Dispositif selon l'une quelconque des revendications précédentes, **caractérisé en ce que** la fraise (3) est conçue sous forme de fraise à rainurer, comportant au moins deux dents (3c) agencées à distance axiale l'une de l'autre sur la périphérie d'un cercle autour de l'axe de la fraise.

8. Dispositif selon l'une quelconque des revendications 1 à 7, **caractérisé en ce que** la fraise comporte un limiteur d'épaisseur de chevrons.

9. Dispositif selon la revendication 8, **caractérisé en ce que** le limiteur d'épaisseur de chevrons est formé par les longueurs des dents en saillie radialement vers l'extérieur par rapport à l'axe de rotation de la fraise (3).
